# EUROPÄISCHE PATENTANMELDUNG

(11) **EP 1 210 982 A1**
(43) Veröffentlichungstag der Anmeldung: **05.06.2002**
(21) Anmeldenummer: 01124015.7
(22) Anmeldetag: 09.10.2001
(51) Int. Cl.: B05B 3/02

(54) **Drehantrieb für ein hydraulisches Werkzeug**

(30) Priorität: 30.11.2000 DE 20020281 U
(71) Anmelder: Hammelmann Maschinenfabrik GmbH, 59302 Oelde (DE)
(72) Erfinder: Stoffers, Christian, 33378 Rheda-Wiedenbrück (DE)
(74) Vertreter: Specht, Peter, Dipl.-Phys.

(57) **Zusammenfassung**

Ein Drehantrieb für ein hydraulisches Werkzeug, mit einem einen Druckwasseranschluß (5) aufweisenden Gehäuse (2), in dem eine mit einem Düsenträger verbundene drehbare Hohlwelle (3) gelagert ist, die einen sich axial erstreckenden mittigen Durchgangskanal (4) aufweist, in den von der dem Druckwasseranschluß (5) zugewandten Seite her eine Hülse (8) eingesteckt ist, durch die Druckwasser führbar ist, wobei zwischen der Hülse (8) und der Hohlwelle (3) eine Dichtung vorgesehen ist, zeichnet sich dadurch aus, daß die Dichtung aus mindestens einer separaten Ringdichtung (9, 16) besteht, die sowohl dichtend an der Wandung des Durchgangskanales (4) als auch an der Hülse (8) anliegt.

## Beschreibung

Die vorliegende Erfindung betrifft einen Drehantrieb für ein hydraulisches Werkzeug gemäß dem Oberbegriff des Anspruchs 1.

Ein derartiger Drehantrieb für ein hydraulisches Werkzeug, wie bspw. einen Düsenkopf, ist sowohl aus der DE 38 12 132 A1 als auch aus der DE 92 16 438 U1 bekannt.

In der ersten Literatur ist der Druckwasseranschluß fester Bestandteil eines Gehäuses, so daß kein Zugriff auf den Durchgangskanal der Hohlwelle von dieser Seite her möglich ist. Zur Abdichtung der Hülse gegenüber dem Kanal, in den die Hülse eingesteckt ist, ist diese deshalb auf ihrer Mantelfläche so ausgebildet, daß sich im Zusammenwirken mit der Wandung des Durchgangskanals im Überlappungsbereich eine Labyrinthspaltdichtung ergibt, die allerdings eine entsprechende Länge der Hülse voraussetzt, um eine halbwegs ausreichende Dichtwirkung zu erzielen.

In diesem Sinn ist auch eine Dichtung in der DE 92 16 438 U1 realisiert, bei der die Labyrinthspaltdichtung nicht direkt mit der Wandung des Durchgangskanales zusammenwirkt, sondern mit einer weiteren Hülse, die endseitig, und zwar auf der dem Druckwasseranschluß gegenüber liegenden Seite in die Hohlwelle eingesteckt ist und einen größeren Mantelbereich der Hülse anliegend umschließt.

Neben der für eine Labyrinthspaltdichtung notwendigen Länge der Dichtfläche, die natürlich eine entsprechende Dimensionierung der Hülse erfordert und insofern fertigungstechnisch nachteilig ist, ist eine Labyrinthspaltdichtung bauartbedingt nicht absolut dicht, so daß Leckwasser auftritt, das kanalisiert und abgeführt werden muß.

Insbesondere beim Betrieb eines solchen Drehantriebes mit höheren Drücken (>2000 bar) erwärmt sich das Leckwasser auf über 60° C, was zu einer Ausfällung von Kalk führt, und Leckageöffnungen verstopft. In der Folge werden Dichtungen, beispielsweise Lagerdichtungen verschlissen, so daß das Leckwasser außenseitig an der Hohlwelle in das Innere des Drehantriebes gelangen kann. Wenn dieser Drehantrieb ein Elektroantrieb ist, wie er in der DE 92 16 438 U1 gezeigt und beschrieben ist, dringt das Leckwasser in den Rotorbereich des Drehantriebes und führt zu dessen Totalausfall.

Der Erfindung liegt daher die Aufgabe zugrunde, einen Drehantrieb der gattungsgemäßen Art so auszubilden, daß er einfacher und kostengünstiger herstellbar ist und seine Standzeit wesentlich erhöht wird.

Diese Aufgabe wird durch einen Drehantrieb gelöst, der die Merkmale des Anspruchs 1 aufweist.

Durch diese konstruktive Maßnahme ergibt sich eine ganze Reihe von Vorteilen.

So kann zunächst die Hülse relativ kurz gehalten werden, was die Einhaltung geringerer Fertigungstoleranzen ermöglicht und die Herstellungskosten senkt.

Da durch die Erfindung kein Leckwasser mehr entsteht bzw. austreten kann, das sich, wie erwähnt, bei hohen Drücken erwärmt mit den daraus sich ergebenden Folgen, wird die Standzeit des Drehantriebes wesentlich erhöht.

Die an sich bekannten Leckageleitungen können durchaus wie bisher vorgesehen sein, wobei sie dann allerdings lediglich Kontroll- bzw. Entlastungsfunktion übernehmen, so daß für den Fall, daß eine Undichtigkeit auftreten sollte, dies durch den Austritt von Leckagewasser erkennbar wird. Insoweit stellen diese Leckageleitungen Kontrolleitungen dar. Als Entlastungsleitung hingegen fungieren sie, weil das bei einer Undichtigkeit eindringende Leckwasser abfließen kann und nicht in das Innere des Drehantriebs eindringt.

Um eine optimale Dichtwirkung zu erzielen, werden die Dichtungen radial so verformt, daß sie an die zugeordneten Wandungen des Kanales einerseits und der Hülse andererseits fest angepreßt werden. Auch bei hohen Drücken ist somit eine sichere und dauerhafte Abdichtung gewährleistet.

Zur Erzeugung der radialen Anpreßkräfte können Druckmittel, beispielsweise in Form einer Druckfeder vorgesehen sein, die konzentrisch auf die Dichtungen, vorzugsweise über eine Zwischenscheibe, einwirken und sie gegen ein Widerlager drücken, so daß eine entsprechende radiale Verformung der Dichtungen erzielt wird.

Bei höheren Drücken kann der Preßdruck auf die Dichtung in der genannten Art und Weise durch das Druckwasser selbst aufgebracht werden.

Nach einem weiteren Gedanken der Erfindung ist vorgesehen, daß bei einer Ausbildung des Drehantriebs als Elektroantrieb, bei dem die Hohlwelle fest mit einem Rotor verbunden ist, der in einem Stator dreht, der elektrische Anschluß aus einem Klemmkasten und einem wasserdichten Stecker besteht, während aus dem Stand der Technik lediglich ein Direktanschluß an den Stator bekannt ist. Dabei ist der Stator direkt mit dem Stecker verbunden, wobei die Steckerrückseite als Klemmbrett dient. Hierdurch kann auf eine Abdichtung und Bearbeitung des Klemmkastens weitgehend verzichtet werden.

Weiter kann bei einem Elektroantrieb vorgesehen sein, daß die Drehzahl der Hohlwelle induktiv erfaßt wird, beispielsweise mittels eines Näherungsschalters, der an geeigneter Stelle innerhalb des Gehäuses plaziert ist.

Diese Erfassung kann gleichzeitig mit einem Drehzahlregler verbunden sein, mit dem eine optimale Drehzahl konstant gehalten wird. Denkbar ist aber auch, die Erfassung lediglich mit einem Signalgeber zu koppeln, der bei Unterschreiten einer vorgegebenen Solldrehzahl aktiv wird.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

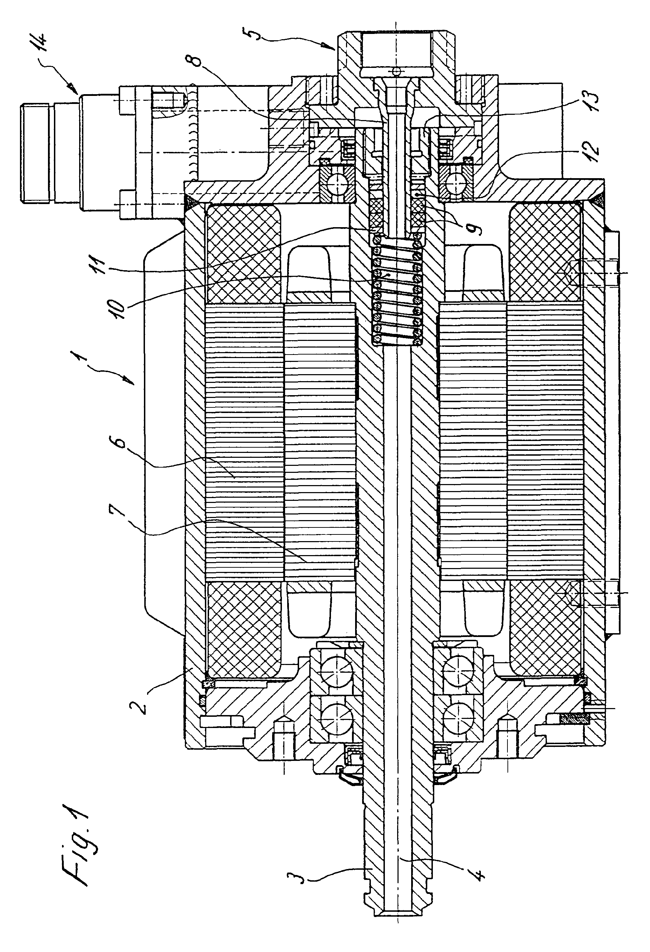

- Fig. 1 u.2: jeweils einen mit einem Drehantrieb für ein hydraulisches Werkzeug in einem Längsschnitt.

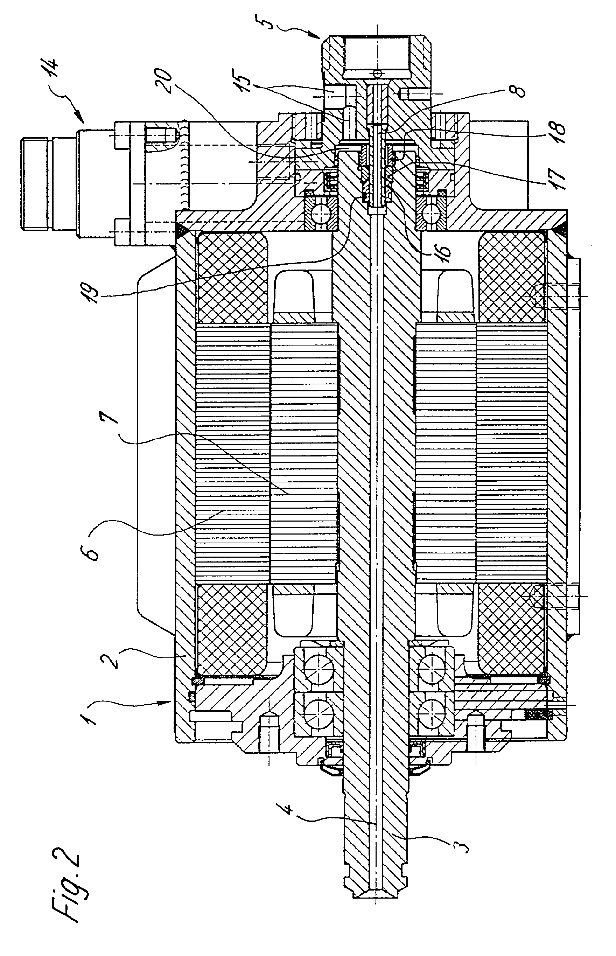

In den Figuren 1 und 2 ist jeweils ein mit einem Drehantrieb für ein hydraulisches Werkzeug dargestellt, der insgesamt mit dem Bezugszeichen 1 versehen ist. Der Übersichtlichkeit halber sind gleiche Bauteile mit den gleichen Bezugszeichen versehen.

So weist der Drehantrieb 1 ein weitgehendes geschlossenes Gehäuse 2 auf, in dem ein Stator 6 und ein damit in Wirkverbindung stehender Rotor 7 angeordnet ist. Der Stator 6 ist direkt mit einer wasserdichten Steckerkupplung 14 verbunden.

In dem Rotor 7 ist verdrehsicher eine Hohlwelle 3 angeordnet, die einen mittig verlaufenden Durchgangskanal 4 aufweist, durch den Druckwasser führbar ist, das über einen Druckwasseranschluß 5, der am Gehäuse 2 befestigt ist, einführbar ist.

Diesem Druckwasseranschluß 5 gegenüber liegend ist an der Hohlwelle 3 ein nicht dargestellter Düsenträger festgelegt, der mit Düsen bestückbar ist. Anstelle von Düsen können auch andere hydraulisch betriebene Werkzeuge angeschlossen sein.

Auf ihrer dem Druckwasseranschluß 5 zugewandten Seite der Hohlwelle 3 ragt eine Hülse 8 in den Kanal 4, der in diesem Bereich erweitert ist.

Zwischen der Wandung des Kanales 4 und der Mantelfläche der Hülse 8 sind separate Ringdichtungen 9, 16 vorgesehen, die dichtend an der jeweiligen Wandung anliegen.

Bei dem in der Figur 1 gezeigten Ausführungsbeispiel sind zwei aneinander liegende Ringdichtungen 9 vorgesehen, die einen viereckigen Querschnitt aufweisen und beidseitig an Scheiben 11, 12 anliegen.

In dem der Hülse 8 nachfolgenden Bereich des Kanales 4 ist eine Druckfeder 10 angeordnet, die sich einerseits am Grund der Kanalerweiterung und andererseits an der Schreibe 11 abstützt.

Durch ein Schraubstück 13, das stimseitig in die Hohlwelle 3 eingeschraubt ist, werden die Dichtungen 9 über die Scheibe 12 gegen die Druckfeder 10 gedrückt, wobei das Schraubstück 13 gegenüber der Druckfeder 10 ein Widerlager bildet. Durch den Druck der Druckfeder 10, der axial auf die Dichtungen 9 wirkt, werden diese, die eine dichtmaterialeigene Verformbarkeit besitzen, radial gegen die Wandungen des Kanales 4 einerseits und der Hülse 8 andererseits gepreßt, so daß eine absolute Dichtigkeit gewährleistet ist.

Durch den auftretenden Reibschluß zwischen den Dichtungen 9 und der Hülse 8 wird diese, die sich mit ihrem einen Kragen aufweisenden Kopf in eine Ausnehmung des Druckwasseranschlusses 5 abstützt, sicher gehalten.

Bei dem in der Figur 2 gezeigten Ausführungsbeispiel, das Drehantrieb 1 darstellt, der insbesondere für hohe Drücke >2000 bar geeignet ist, ist die dem Druckwasseranschluß 5 zugewandte Stirnseite als ein zur Mittelachse hin ansteigender Konus ausgebildet, der sich an einer daran angepaßten Stirnseite eines anliegenden Stützringes 17 abstützt. Die gegenüber liegende Stirnseite des Stützringes 17 liegt an einem Schraubstück 18 an, das von der Stirnseite der Hohlwelle 3 in den Kanal 4 eingeschraubt ist.

Die Hülse 8 ist hier ebenfalls in dem Druckwasseranschluß 5 gehalten.

Im Funktionsfall, wenn also das Druckwasser über den Druckwasseranschluß 5 in den Kanal 4 strömt, wird durch das Druckwasser auf die dem Konus abgewandte Seite der Ringdichtung 16 ein Druck ausgeübt, der die Ringdichtung 16 gegen den Stützring 17 drückt, wobei die beiden aneinander liegenden konischen Ausführungen im Sinne eines Keiles wirken und eine Anpressung des Dichtringes 16 insbesondere an die Wandung der Hülse 8 bewirken.

Die Dichtwirkung zur Wandung des Kanales 4 wird durch einen in der Ringdichtung 16 vorgesehenen O-Ring 19 verstärkt.

Im Falle einer Undichtigkeit tritt Leckwasser zwischen der Ringdichtung 16 und der Hülse 8 bzw. der Wandung des Kanales 4 zur Stirnseite der Hohlwelle 3 hin aus, wo es in eine Kammer 20 mündet, an die eine Leckageöffnung 15 angeschlossen ist, aus der das Leckwasser austreten kann. Dabei dient die Leckageöffnung 15 als Kontroll- bzw. Entlastungsöffnung, durch die erkennbar wird, daß eine Undichtigkeit vorliegt.

In beiden Ausführungsbeispielen ist zu erkennen, daß ein sehr einfaches Auswechseln der Ringdichtungen 9, 16 von der Druckwassereingangsseite her möglich ist, da hierzu lediglich der Druckwasseranschluß 5 und die Hülse 8 zu entfernen sind.

## Patentansprüche

1. Drehantrieb für ein hydraulisches Werkzeug, mit einem einen Druckwasseranschluß (5) aufweisenden Gehäuse (2), in dem eine mit einem Düsenträger verbundene drehbare Hohlwelle (3) gelagert ist, die einen sich axial erstreckenden mittigen Durchgangskanal (4) aufweist, in den von der dem Druckwasseranschluß (5) zugewandten Seite her eine Hülse (8) eingesteckt ist, durch die Druckwasser führbar ist, wobei zwischen der Hülse (8) und der Hohlwelle (3) eine Dichtung vorgesehen ist, **dadurch gekennzeichnet, daß** die Dichtung aus mindestens einer separaten Ringdichtung (9, 16) besteht, die sowohl dichtend an der Wandung des Durchgangskanales (4) als auch an der Hülse (8) anliegt.

2. Drehantrieb nach Anspruch 1, **dadurch gekennzeichnet, daß** die Ringdichtungen (9, 16) an die zugeordneten Wandungen des Kanales (4) und der Hülse (8) vollflächig angepreßt sind.

3. Drehantrieb nach Anspruch 2, **dadurch gekennzeichnet, daß** die Ringdichtungen (9) stirnseitig mittels einer im Kanal (4) geführten Druckfeder (10) mit Druck beaufschlagt werden und sich gegenüber liegend an einem Schraubstück (13) direkt oder indirekt abstützen, das in die Hohlwelle (3) eingeschraubt ist.

4. Drehantrieb nach Anspruch 2, **dadurch gekennzeichnet, daß** die dem Druckwasseranschluß (5) zugewandte Stirnseite der Ringdichtung (16) zur Mittellängsachse hin ansteigend konisch ausgebildet ist und sich mit dieser Stirnseite an einem Stützring (17) abstützt, der der Koniszität der Ringdichtung (16) entspricht, wobei der Stützring (17) mit seiner gegenüber liegenden Stirnseite an einem Schraubstück (18) anliegt, das stirnseitig in die Hohlwelle (3) eingeschraubt ist.

5. Drehantrieb nach Anspruch 4, **dadurch gekennzeichnet, daß** die der konischen Stirnseite gegenüber liegende Stirnseite der Ringdichtung (16) mit dem Druckwasserkanal (4) in Wirkverbindung steht.

6. Drehantrieb nach Anspruch 1, bei dem der Drehantrieb aus einem Stator (6) und einem fest mit der Hohlwelle verbundenen Rotor (7) besteht, **dadurch gekennzeichnet, daß** der Stator (6) direkt mit einer elektrischen Stecker-Kupplung (14) verbunden ist, die über einen Klemmkasten an dem Gehäuse (2) angeschlossen ist.

7. Drehantrieb nach Anspruch 1, **dadurch gekennzeichnet, daß** in dem Gehäuse (2) ein Näherungsschalter festgelegt ist, mit dem die Drehzahl der Hohlwelle (3) meßbar ist.

8. Drehantrieb nach Anspruch 7, **dadurch gekennzeichnet, daß** der Näherungsschalter ein Induktionsschalter ist.

9. Drehantrieb nach Anspruch 7, **dadurch gekennzeichnet, daß** der Näherungsschalter mit einem Drehzahlregler verbunden ist.
